# EUROPÄISCHE PATENTANMELDUNG

(11) **EP 3 388 373 A1**
(43) Veröffentlichungstag der Anmeldung: **17.10.2018**
(21) Anmeldenummer: 18164321.4
(22) Anmeldetag: 27.03.2018
(51) Int. Cl.: B65G 47/86

(54) **TRANSPORTMODUL ZUM TRANSPORT EINES BEHÄLTERS, SOWIE VERARBEITUNGSVORRICHTUNG UND VERFAHREN ZUM TRANSPORT EINES BEHÄLTERS**

(30) Priorität: 12.04.2017 EP 17166335
(71) Anmelder: Ferrum AG, 5503 Schafisheim (CH)
(72) Erfinder: Triebel, Thomas, 8166 Niederweningen (CH)
(74) Vertreter: Intellectual Property Services GmbH

(57) **Zusammenfassung**

Die Erfindung betrifft ein Transportmodul (1) zum Transport eines Behälters (2) von einer Behälterquelle (31) zu einem Behälterempfänger (32), wobei das Transportmodul (1) eine zwischen einem Aufnahmebereich (4) und einem Übergabebereich (5) vorgesehene Transportstrecke (6) mit einem Transportmittel (61) umfasst. Erfindungsgemäss ist am Transportmittel (61) ein erstes Haltemittel (7, 71) zur Aufnahme und Halterung des Behälters (2) derart angeordnet und ausgestaltet, dass der Behälter (2) im Aufnahmebereich (4) vom ersten Haltemittel (7, 71) erfassbar, und der Behälter (2) entlang der Transportstrecke (6) vom Aufnahmebereich (4) bis zum Übergabebereich (5) vom ersten Haltemittel (7, 71) getragen, schwebend transportierbar ist. Darüberhinaus betrifft die Erfindung eine Verarbeitungsvorrichtung (100) zur Verarbeitung eines Behälters, sowie ein Verfahren zum Transport eines Behälters.

## Beschreibung

Die Erfindung betrifft ein Transportmodul zum Transport eines Behälters von einer Behälterquelle zu einem Behälterempfänger, insbesondere zum Transport des Behälters von einem Behälterspender zu einer Füllstation zum Befüllen des Behälters, oder zum Transport des Behälters von einer Füllstation zur Befüllung des Behälters zu einem Verschliessmodul zum Verschliessen einer Behälteröffnung des Behälters mittels eines Deckels, sowie eine Verarbeitungsvorrichtung zur Verarbeitung eines Behälters und ein Verfahren zum Transport eines Behälters gemäss dem Oberbegriff des unabhängigen Anspruchs der jeweiligen Kategorie.

Ein gattungsgemässes Transportmodul zum Transport eines Behälters zu einem Behälterempfänger, der unter anderem in der DE 749 636 oder der DE 42 34 115 A1 in besonderer Ausgestaltung eines Schliessmoduls beschrieben wurde, ist beispielweise in der DE 42 36 784 A1 offenbart.

Vor allem in der Getränkeindustrie, aber nicht nur, besteht die gängige Praxis darin, Getränkedosen nach dem Füllprozess mittels eines Transportmoduls in Form eines sogenannten Einführtischs in ein Verschliessmodul in Ausgestaltung eines Dosenverschliessers zu fördern. Dieser Einführtisch besteht aus einem Gleitband, auf dem die Dosen stehend angeordnet werden und mittels Kettenmitnehmer transportiert werden. Um ein seitliches Ausbrechen des Dosenstroms zu verhindern, begrenzen Seitenführungen eine seitliche Bewegung der Dosen. Das Gleiten der Dosen ist entscheidend für einen ruhigen Lauf derselben, da sonst Produktverlust durch Verschwappen entstehen könnte, was den Getränkeabfüller im Laufe der Zeit entsprechend bedeutende Verlust bescheren kann, wobei das Verschwappen bzw. Austreten der Inhaltsstoffe aus den Behältern oder Dosen zudem unnötige zusätzliche Reinigungsarbeiten, Probleme mit der Hygiene usw. nach sich ziehen kann.

Im Verschliessmodul, also z.B. im Dosenverschliesser gelangen die noch offenen Dosen auf die sogenannten Falzstationen, wo sie mit einem Deckel beaufschlagt und gleichzeitig der Kopfraum in der Dose mit einem Schutzgas bzw. Inertgas begast wird, um die Haltbarkeit des Produktes sicherzustellen. Anschliessend wird die Dose auf der Falzstation in Rotation versetzt, während die Falzstation gleichzeitig um die Zentralachse des Verschliessmoduls rotiert. Da in der Praxis meistens mehrere Falzstationen auf einem karusselartigen Mittelteil des Verschliessmoduls im Einsatz sind, werden höhere Verschliessleistungen möglich.

Zum besseren Verständnis der vorliegenden Erfindung wird im Folgenden zunächst ein aus dem Stand der Technik bekanntes Transportmodul in Form eines Einführtischs gemäss DE 42 34 115 A1 anhand der Fig. 1 beschrieben. Der zuvor kurz beschriebene Einführtisch könnte beispielweise im Wesentlichen so ausgestaltet sein.

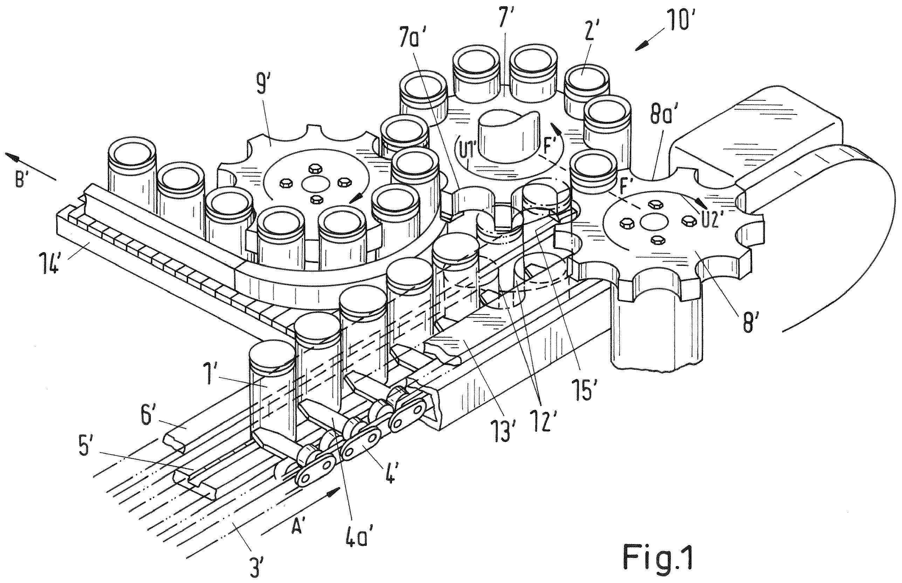

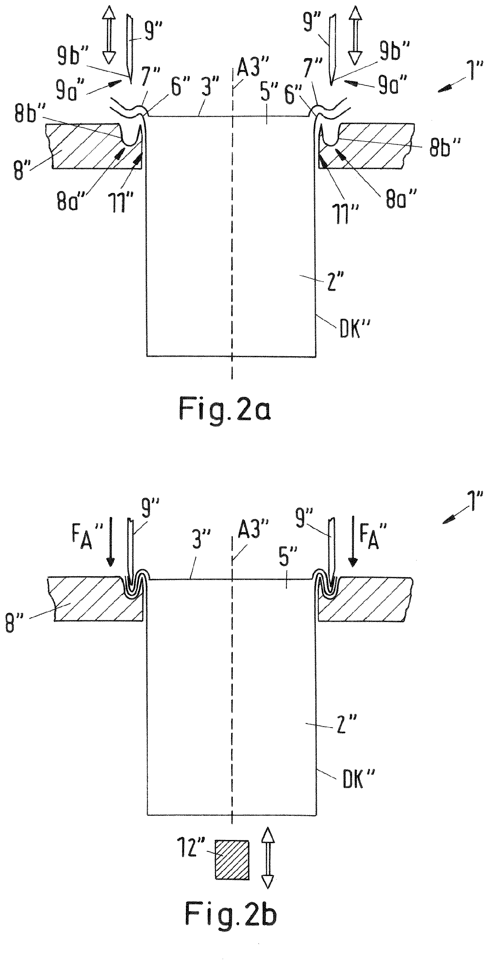

Zur besseren Unterscheidung des bekannten Standes der Technik von der vorliegenden Erfindung werden im Rahmen dieser Anmeldung Bezugszeichen zu Merkmalen bekannter Vorrichtungen mit einem Hochkomma (in Fig. 1) bzw. mit zwei Hochkommata (Fig. 2a und Fig. 2b) versehen, während Merkmale zu erfindungsgemässen Vorrichtungen oder deren Bestandteilen kein Hochkomma tragen.

Bei dem bekannten Transportmodul 3' gemäss Fig. 1 wird ein in einer in Fig. 1 nicht dargestellten Füllvorrichtung zuvor mit Inhalt gefüllter Behälter 1', im vorliegenden Beispiel eine metallische Dose 1' zur Aufnahme eines Getränkes oder zur Aufnahme eines anderen Lebensmittels oder eines anderen beliebigen Produktes, durch einen an einer Antriebskette 4' angebrachten Finger 4a' auf einer Schiene 5' des Transmoduls 3' in Richtung A' geschoben. Die Dose 1' wird dabei an ihren gegenüber liegenden Seiten durch eine Führungsleiste 6' und eine kettenseitige Führung 13' geführt. Sodann wird die Dose 1' auf einen Dosenheber 12' eines Verschliessmoduls 10', das sich synchron mit dem Transportmodul 3' bewegt, übertragen und tritt in eine Ausnehmung 7a' eines Verschliessdrehkopfes 7' ein, der sich in Umfangsrichtung U1' dreht. Beim Eintritt in den Verschliessdrehkopf 7' klemmen eine Ausnehmung 8a', 15' eines gegenüberliegenden Drehkopfes 8' bzw. Gegendrehkopfes 8', der bevorzugt an einer zum Verschliessdrehkopf 7' symmetrischen Position angeordnet ist und sich mit dem Verschliessdrehkopf 7' synchronisiert in umgekehrter Drehrichtung U2' dreht, und die Ausnehmung 7a' des Verschliessdrehkopfes 7' den Behälter 1' auf einer Linie F'-F' von gegenüberliegenden Seiten her ein, und zentrieren den Behälter 1' in einer zum Verschliessen oder Bördeln geeigneten Position. Nachdem ein Behälterdeckel 2' mittels einer nicht dargestellten Verschliess- bzw. Bördelrolle mit dem Behälter 1' verbördelt wurde, bewegt sich der mit dem Behälterdeckel 2' verschlossene Behälter 1' über einen Auswerferdrehkopf 9' und eine Auswurfschine 14' in Richtung B' über einen Dosenauswerferförderer 9' und wird dann dem nächsten Schritt im Ablauf bzw. Prozess zugeführt.

Es versteht sich, dass die zuvor beschriebenen und durch die Erfindung zu verbessernden bekannten Transportmodule lediglich exemplarisch für die bis heute im Stand der Technik gebräuchlichen Systeme zu verstehen sind. Durch die Erfindung werden selbstverständlich auch alle auf ähnlichen Prinzipien beruhenden bzw. nach ähnlichen Prinzipien funktionierenden bekannten Transmodule verbessert, bzw. sind die meisten sonstigen derartigen Transportsysteme durch ein erfindungsgemässes Transportmodul ersetzbar.

Eine besondere Herausforderung auf dem Gebiet der Verpackung bzw. der Konservierung von Produkten aller Art wie Getränken, Lebensmitteln wie z.B. Gemüse oder Obst, oder auch bei der Verpackung sonstiger Produkte wie Mineralöle, Schmierstoffe und vieler weiterer Produkte, die dem Fachmann alle wohl bekannt sind, besteht vor allem bei der Benutzung von Behältern in Form von metallischen Dosen darin, dass die Wandstärken der Behälter, also insbesondere die die Dosen begrenzenden Wände und Deckel immer dünner werden sollen, um Ressourcen für die Herstellung der Dosen einzusparen, den Aufwand beim Recycling der Dosen zu reduzieren, aber auch um Gewicht beim Transport und der Handhabung der Dosen zu sparen um damit letztlich nicht nur einen wirtschaftlicheren sondern auch umweltschonenderen Umgang mit den vorhandenen Ressourcen zu gewährleisten.

Ein bisher allerdings ungelöstes Problem beim Verschliessen von Behältern und Dosen, deren Wandstärke immer weiter reduziert wird, besteht darin, dass diese Behälter, insbesondere Getränke- oder Lebensmitteldosen, oder Konservendosen, oder Behälter für sonstige Produkte den nach den klassischen Verschlussverfahren notwendigen Radial- und Axialdrücken, die bei den bekannten klassischen Verfahren zu einem einwandfreien Verschluss der Behälter nötig sind, nicht mehr ausreichend standhalten.

Dieses Problem hat die Anmelderin der vorliegenden Anmeldung bereits früher klar erkannt und um den daraus bestehenden Bedürfnissen des Marktes Rechnung zu tragen mit Ihrer PCT/EP2016/053764 eine Lösung bereitgestellt, die das geschilderte bekannte Problem mit dem Radialdruck und dem Axialdruck weitgehend oder im Speziellen vollständig vermeidet, so dass es durch die zuvor genannte Erfindung der Anmelderin nunmehr erstmals möglich ist, Behälter, insbesondere in Form von metallischen Dosen, unabhängig von der Wandstärke des Behälters zuverlässig zu verschliessen und zwar ohne dass der Behälter oder der Deckel beim Verschliessen beschädigt oder sonst beeinträchtigt wird. Darüber hinaus ist es durch diese Erfindung erstmals möglich, nicht nur Behälter oder Dosen mit fast beliebig geringer Wandstärke zuverlässig zu verschliessen. Auch können jetzt Behälter und Dosen aus anderen Materialien, z.B. aus diversen Kunststoffen, aus Biomaterialien oder anderen, insbesondere aus Recycling fähigen Materialien zuverlässig verschlossen werden, weil die Anmelderin das Problem mit den radialen und axialen Druckbelastungen beim Verschliessen der Behälter durch die vorgenannte Erfindung vollumfänglich gelöst hat.

Das bis zur Erfindung gemäss PCT/EP2016/053764 bestehende Problem mit dem Axialdruck beim Verschliessen der Behälter soll im Folgenden zum besseren Verständnis kurz umrissen werden.

Die bekannten Verschliessmodule umfassen als wesentliches Element eine Einspannvorrichtung zur Aufnahme des zu verschliessenden Behälters. Im Betriebszustand ist der zu verschliessende Behälter in die Einspannvorrichtung eingebracht und durch diese in axialer und radialer Richtung gesichert, so dass der Behälter grundsätzlich sowohl axialen auch als radialen Kräften ausgesetzt wird, was wie weiter unten erläutert dazu führt, dass die Behälter und Deckel eine gewisse Mindestwandstärke aufweisen müssen, da sie sonst den axial und radial einwirkenden Kräften nicht ausreichend standhalten können. Beim Verschliessen des Behälters ist weiter ein Deckel über der Behälteröffnung des zu verschliessenden Behälters zentriert eingebracht. Der Behälter weist im Bereich der Behälteröffnung einen umlaufenden Behälterflansch und der Deckel einen umlaufenden Deckelflansch auf. Zum Verschliessen der Behälteröffnung durch den Deckel umfasst das Verschliessmodul zusätzlich zwei um jeweils eine Achse drehbar gelagerte Falzrollen, die den Behälterflansch mit dem Deckelflansch unter einer gegebenen Krafteinwirkung miteinander verpressen, wobei die Verpressung durch ein kontinuierliches Abrollen in Umfangsrichtung entlang dem Umfang der Behälteröffnung erfolgt.

Folglich ist durch die auf den Behälter bzw. den Deckel wirkenden Kräfte eine Mindeststeifigkeit des Deckels und des Behälters erforderlich. In der Praxis besteht daher bisher die Notwendigkeit, diese Mindeststeifigkeit des Deckels und des Behälters durch eine entsprechende Materialwahl und Materialdicke, und durch einen entsprechenden Aufbau des Deckels und des Behälters zu erreichen. Auch sind um einen verschlusssicheren Falzwulst mittels des umlaufenden Verschliessverfahrens zu erzeugen zudem entsprechend grosse Deckelflanschflächen und Behälterflanschflächen erforderlich. Dies alles bringt einen relativ hohen Materialverbrauch mit sich, was wie bereits erwähnt nicht nur hohe Materialkosten zur Folge hat.

Ein weiterer wesentlicher Nachteil des zuvor beschriebenen bis zur PCT/EP2016/053764 bekannten klassischen Verschliessmoduls besteht darin, dass aufgrund der Art der Verpressung, nämlich durch das kontinuierliche Abrollen in Umfangsrichtung entlang dem Umfang der Behälteröffnung entsprechend hohe Verschliesszeiten entstehen. Dies wirkt sich negativ auf den Durchsatz und damit negativ auf die Kosten aus.

Zudem bringt der klassische Aufbau des Verschliessmoduls bei einem Werkzeugwechsel für den Betrieb auf eine andere Behältergeometrie bzw. Deckelgeometrie hohe Rüstzeiten mit sich, da die Einspannvorrichtung und/oder die Falzrollen eingestellt und/oder ausgewechselt werden müssen. Darüber hinaus ist die Verwendung des bekannten Verschliessmoduls auf eine runde Behälteröffnung, d.h. eine Öffnung ohne Ecken, begrenzt und bei den bekannten Verschliessmodulen muss die Behälteröffnung im Betriebszustand zudem in einer horizontalen Ebene angeordnet sein. Schliesslich begrenzt die Art der Verpressung, nämlich durch das kontinuierliche Abrollen in Umfangsrichtung entlang dem Umfang der Behälteröffnung, die Falzform auf zweidimensionale, d.h. ebene Umfangslinien. Dadurch können keine dreidimensionalen Falzformen hergestellt werden.

All diese Probleme hat die Anmelderin bereits früher erkannt und durch die Erfindung gemäss PCT/EP2016/053764 durch ein neues Verschliessmodul und ein entsprechendes neues Verfahren zum Verschliessen von Behältern zuverlässig und erfolgreich gelöst, wie im Folgenden zur Verdeutlichung anhand der Fig. 2a und Fig. 2b skizziert werden soll.

Fig. 2a zeigt einen Querschnitt durch ein Beispiel eines Verschliessmoduls 1" der Erfindung gemäss PCT/EP2016/053764. Gemäss Fig. 2a umfasst das Verschliessmodul 1" eine Stützeinheit 8" mit einer Stützfläche 8a" und eine Presseinheit 9" mit einer Pressfläche 9a". Die Stützfläche 8a" ist als ein Stützflächenprofil 8b" und die Pressfläche 9a" als ein korrespondierendes Pressflächenprofil 9b" ausgebildet. Die Stützeinheit 8" ist im Verschliessmodul 1" ortsfest angeordnet, und die Presseinheit 9" ist in axialer Richtung relativ zu einer Achse A3" der Stützeinheit 8" bewegbar vorgesehen. Die Stützeinheit 8" ist als eine Halteeinheit zur Auflage des Behälterflansches 6" ausgebildet. Durch die Halteeinheit ist der zu verschliessende Behälter 2" am Behälterflansch 6" in axialer Richtung zur Achse A3" gesichert. Zudem ist der Behälter 2" durch die Halteeinheit in radialer Richtung zur Achse A3" fixiert und ein Zentriermittel 11" zentriert.

Wie Fig. 2b zeigt wird während des Verschliessvorgangs die Presseinheit 9" in axialer Richtung zur Stützeinheit 8" verschoben. Dabei werden der Deckelflansch 7" des Deckels 3" und der Behälterflansch 6" zwischen dem Stützflächenprofil 8b" und dem Pressflächenprofil 9b" durch eine axial wirkende Presskraft F_{A}" formschlüssig derart miteinander verpresst, dass auf den Dosenkörper DK" als solches keinerlei axialen Presskräfte F_{A}" einwirken. Nach dem verschliessen kann der Behälter 2" dann mittels des Auswerfelements 12" aus der Stützeinheit 8" wieder entfernt werden.

Einfach ausgedrückt ist der zu verschliessende Behälter 2" mit seinem Behälterflansch 6" in der Stützfläche 8a" der Stützeinheit 8" frei schwebend aufgehängt und der Deckel 3" wird mit seinem Deckelflansch 7" und dem Behälterflansch 6" mit zumindest einer in axialer Richtung A3" wirkenden Presskraft F_{A}" zum Verschliessen des Behälters 2" verpresst, ohne dass der Behälterkörper DK" einer axial wirkenden Presskraft F_{A}" ausgesetzt wird, da der Behälterkörper DK" frei am Behälterflansch 6" aufgehängt ist.

Dadurch dass zumindest keinerlei axialen Presskräfte F_{A}" mehr auf den Behälterkörper DK" mehr einwirken, kann die Dicke zumindest des Behälterkörpers DK" und damit die Menge des insgesamt für die Herstellung des Behälters 2" benötigten Materials auf ein absolutes Minimum reduziert werden.

Damit sind durch die Erfindung gemäss PCT/EP2016/053764 zwar die eingangs erläuterten Probleme im Zusammenhang mit dem Verschliessen der Behälter gelöst worden. Allerdings müssen die Behälter, z.B. Getränkedosen, Lebensmitteldosen oder andere zu verschliessende Behälter den Verschliessmodulen, und zwar sowohl den neuartigen Verschliessmodulen gemäss PCT/EP2016/053764 als auch den davor bekannten Verschliessmodulen des älteren Typs immer noch mit den eingangs beschriebenen klassischen Transportmodulen z.B. von einem Behälterspender der die leeren Behälter bereitstellt oder aus einer Füllstation in der die Behälter zunächst befüllt werden, der entsprechenden nächsten Bearbeitungsstation zugeführt werden.

Die eingangs beschriebenen und aus dem Stand der Technik bekannten Transportmodule in Form von klassischen Einführtischen haben dabei unabhängig von der Art des Verschliessmoduls, dem der Einführtische die zu verschliessenden Behälter zuführt, oder unabhängig von der Füllstation, der die Behälter zum Befüllen zugeführt werden, eine ganze Reihe von Nachteilen, die bisher noch nicht auf eine zufriedenstellende Weise behoben werden konnten.

So müssen bisher zumindest in bestimmten Fällen bei einem Werkzeugwechsel für den Betrieb auf eine andere Behältergeometrie unter Umständen hohe Umrüstzeiten in Kauf genommen werden, da die Behälter z.B. nicht mehr in die Führungseinrichtungen des Einführtisches passen. Entweder weil die Behälter zu gross sind, so dass die Führungseinrichtungen des Einführtisches die Behälter nicht mehr aufnehmen können oder weil die Behälter zu klein oder zu gross, d.h. z.B. zu schmal, zu niedrig oder zu hoch sind, so das diese nicht mehr sicher in der Führungseinrichtung positioniert werden können und dadurch der Inhalt, insbesondere flüssiger Inhalt beim Transport aus den Behältern herausgelangt oder die Behälter gar vom Transportmodul herunter fallen können, da die Behälter auf dem Transportmodul, beispielweise auf dem Einführtisch nicht mehr sicher gehaltert werden können. Darüber hinaus ist die Verwendung der bekannten Transportmodule wie die beschriebenen Einführtische usw. in der Regel auf eine bestimmte Geometrie der Behälter, meist auf runde Behälter mit im wesentlichen kreisförmigen radialen Querschnitt beschränkt, d.h. auf eine entsprechende Geometrie ohne Ecken beschränkt. Schliesslich ist die sichere Übergabe der Behälter vom Transportmodul an einen Behälterempfänger, z.B. an das Verschliessmodul grundsätzlich ein kritischer Verfahrensschritt, der unter allen Umständen sicher und zuverlässig gewährleistet sein muss.

Die Aufgabe der Erfindung ist es daher ein verbessertes Transportmodul zum Transport eines Behälters zu einem Behälterempfänger, insbesondere zum Transport des Behälters von einem Behälterspender zu einem Behälterempfänger in Ausgestaltung einer Füllstation zum Befüllen des Behälters, oder zum Transport von einer Füllstation zur Befüllung des Behälters zu einem Behälterempfänger in Ausgestaltung eines Verschliessmoduls zum Verschliessen einer Behälteröffnung des Behälters mittels eines Deckels vorzuschlagen, dass die aus dem Stand der Technik bekannten Probleme behebt, welches einen vereinfachten und in Bezug auf die zu befördernden Behälter flexiblen Aufbau hat und bei welchem die Anforderungen an das Material von Behälter und/oder Deckel hinsichtlich ihrer Stabilität bzw. Dicke reduziert sind. Darüber hinaus soll das Transportmodul flexibel an die verschiedenen im Gebrauch befindlichen Verschliessmodule anpassbar und mit diesen verwendbar sein und insbesondere für den eingangs beschriebenen neuen Typ eines Verschliessmoduls z.B. gemäss PCT/EP2016/053764 optimal einsetzbar sein, so dass auch sehr moderne Verschliessmodule, beispielsweise solche der gemäss Fig. 2a und Fig. 2b beschriebenen Art, optimal mit zu verschliessenden Behältern versorgt werden können. Dadurch sollen zusätzlich kürzere Verschliesszeiten und auch kürzere Rüstzeiten erzielbar sind, bei welchem einzelne Komponenten des Transportmoduls einfach und schnell austauschbar sind, und bei welchem darüberhinaus die Behälter nicht auf runde bzw. zylinderartige Geometrien begrenzt sind. Ausserdem wird eine starke Vereinfachung des Verschliessers erreicht.

Eine weitere Aufgabe der Erfindung ist es eine entsprechende Verarbeitungsvorrichtung zur Verarbeitung eines Behälters sowie ein korrespondierendes Verfahren zum Transport eines Behälters bereitzustellen.

Die diese Aufgaben lösenden Gegenstände der Erfindung sind durch die Merkmale des unabhängigen Anspruchs der jeweiligen Kategorie gekennzeichnet.

Die abhängigen Ansprüche beziehen sich auf besonders vorteilhafte Ausführungsformen der Erfindung.

Die Erfindung betrifft somit ein Transportmodul zum Transport eines Behälters von einer Behälterquelle zu einem Behälterempfänger, wobei das Transportmodul eine zwischen einem Aufnahmebereich und einem Übergabebereich vorgesehene Transportstrecke mit einem Transportmittel umfasst. Erfindungsgemäss ist am Transportmittel ein erstes Haltemittel zur Aufnahme und Halterung des Behälters derart angeordnet und ausgestaltet, dass der Behälter im Aufnahmebereich vom ersten Haltemittel erfassbar, und der Behälter entlang der Transportstrecke vom Aufnahmebereich bis zum Übergabebereich vom ersten Haltemittel getragen, schwebend transportierbar ist.

Wesentlich für die Erfindung ist somit, dass der Behälter mit Hilfe des Haltemittels entlang der Transportstrecke vom Aufnahmebereich bis zum Übergabebereich schwebend transportierbar ist. Mit anderen Worten, gemäss der vorliegenden Erfindung steht der Behälter nicht mehr auf einem Transportband und muss mit Führungseinrichtungen auf dem Transportband zumindest seitlich geführt werden, sondern der Behälter hängt beim Transportvorgang vielmehr frei schwebend am Haltemittel, so dass keine zusätzlich Führungs- oder Haltemassnahmen wie im Stand der Technik zwingend notwendig getroffen werden müssen. Es sind damit nicht nur keine seitliche Führungen mehr notwendig, sondern darüber hinaus braucht ein erfindungsgemässes Transportmodul auch nicht aufwändig auf eine spezielle Behältergrösse oder auf eine spezielle Behälterform gesondert eingestellt zu werden, da die Haltevorrichtung für alle geläufigen Behältergrössen und Behälterformen geeignet ist, weil sie diese einfach frei schwebend trägt, ohne dass weitere Führungs- oder Befestigungsmassnahmen während des Transportes des Behälters getroffen werden müssen. Somit kann bei einem erfindungsgemässen Transportmodul auch auf die aus dem Stand der Technik bekannten notwendigen Elemente wie Tischbleche, Gleitbänder usw. verzichtet werden, da diese bei einem frei schwebenden Transport der Behälter nicht benötigt werden.

Weitere wesentliche Vorteile des Transportmoduls der vorliegenden Erfindung ergeben sich dadurch, dass der im Stand der Technik sehr schwierig zu bewerkstelligende präzise Übergang vom Füllerteller auf das Tischblech des Einführtisches, also z.B. der Übergang des Behälters von einer Behälterquelle in Form einer Füllstation zum Befüllen des Behälters hin zum Transportmodul nunmehr sehr einfach erfolgt und insbesondere nicht mehr länger bei der Installation aufwändig und sorgfältig eingestellt werden muss. Die bekannten Probleme bei der Einstellung, wobei bisher meist zusätzlich zwischen warm/kalt Betrieb der Anlage unterschieden werden musste, werden durch die Verwendung eines erfindungsgemässen Transportmoduls ebenfalls vermieden.

Wie bereits angedeutet, müssen auch die Einrichtungen zur Führung der Behälter auf dem Einführtisch, also auf dem Transportmodul und grösstenteils auch beispielweise im Verschliessmodul, also im Verschliesser nicht mehr vorgenommen und auch bei einem Werkzeugwechsel nicht mehr zeitaufwendig eingestellt und auch nicht gereinigt werden.

Somit entfallen durch die Erfindung praktisch alle aus dem Stand der Technik bekannten technisch heiklen Übergänge zwischen Behälterquelle und Transportmodul bzw. zwischen Transportmodul und Behälterempfänger, also z.B. auch auf dem Einführtisch wie beim Übergang vom Tischblech auf das Gleitband, Gleitband auf Falzteller, usw.. Es versteht sich, dass damit auch die gesamte Gleitthematik auf dem Einführtisch inklusive Bandschmierung gegenstandslos wird.

Bei Verwendung eines Innovativen Verschliessers beispielweise gemäss PCT/EP2016/053764 wie exemplarisch anhand der Fig. 2a und Fig. 2b beschrieben, wird Im Verschliessmodul auch kein technisch aufwändiges Mittelteil mit eingestellten Hubstationen mehr benötigt und in einem solchen Verschliesser müssen auch die Stationen, auf denen die Dosen verschlossen werden, nicht mehr notwendig um die eigene Achse beim Verschliessvorgang gedreht werden, wie es bei den bekannten Anlagen im Stand der Technik bisher zwingend notwendig war.

Bei einem besonders bevorzugten Ausführungsbeispiel eines erfindungsgemässen Transportmoduls ist das erste Haltemittel zur Erfassung und Halterung des Behälters in Form eines Greifers, insbesondere als Greifer in Form einer Greifzange ausgestaltet. Die Behälter können dann mit den Greifern, die z.B. im Abstand der Teilung des Füllers und des Verschliessers angeordnet sind, aus dem Füller herausgenommen und so dem Dosenverschliesser zugeführt werden. Die Greifer packen die Dosen in einem oberen Neckbereich und halten sie bis zur Übergabe im Verschliesser fest. Auf den Falzstationen können sich dann ebenfalls Greifer befinden, die die ankommenden Behälter übernehmen und die Behälter während des um die Zentralachse des Verschliessers stattfindenden Verschlussvorgangs ebenfalls im Neckbereich festhalten.

Es versteht sich dabei von selbst, dass für bestimmte Anwendungen das erste Haltemittel zur Erfassung und Halterung des Behälters auch als ein Kontaktmodul, insbesondere als ein Unterdruck unterstütztes Saugmodul, oder als ein Magnet unterstütztes Kontaktmodul, oder als ein adhäsiv unterstütztes Kontaktmodul ausgestaltet sein kann. So kann das erste Haltemittel alternativ zum Greifer oder auch zusätzlich zum Greifer einen mit einem Unterdruck beaufschlagbaren Saugkopf umfassen, so dass der Behälter durch den Unterdruck am Saugkopf haften bleibt. Ebenso ist es in ganz speziellen Fällen möglich, dass das Kontaktmodul spezielle adhäsive Eigenschaft hat und / oder ein elektromagnetisches oder permanentmagnetisches Element umfasst, mit welchem der Behälter am Haltmittel alternativ zum oder zur Unterstützung des Greifers gehalten werden kann, sofern das Material des Behälters beispielweise magnetisch ist oder selbst spezielle adhäsive Eigenschaften aufweist.

Natürlich kann der Behälter durch das Haltelement auch in jeder anderen geeigneten Art und Weise gehalten werden, beispielsweise indem der Greifer den Behälter nicht umschliesst sondern den Behälter an einer geeigneten Stelle, beispielweise an einer Wulst klemmt und so den Behälter sicher hält. Der Fachmann kennt dabei eine ganze Reihe anderer Massnahmen, wie ein Behälter geeignet mittels eines Haltelements sicher und zuverlässig gehalten werden kann.

Das Transportmittel zum Bewegen des ersten Haltemittels kann dabei in dem Fachmann an sich bekannter Weise auf vielfältige Art geeignet ausgebildet sein und wird in der Praxis häufig eine von einem Antrieb angetriebene Transportkette und / oder ein vom Antrieb angetriebenes Transportband oder eine andere an sich bekannte Antriebstechnik, wie beispielweise einen Linearmotor oder eine andere geeignete, eventuell Magnetfeld basierte Antriebstechnik umfassen, an welchem das erste Haltemittel zur Halterung des Behälters geeignet ausgebildet und wirkfest verbunden ist.

Die Erfindung betrifft weiter eine Verarbeitungsvorrichtung zur Verarbeitung eines Behälters umfassend eine Behälterquelle, einen Behälterempfänger, sowie ein Transportmodul der vorliegenden Erfindung. Dabei ist der Behälter mittels des Transportmoduls von der Behälterquelle zum Behälterempfänger transportierbar.

In der Praxis kann die Behälterquelle zum Beispiel ein an sich bekannter Behälterspender zum Bereitstellen leerer Behälter sein und / oder der Behälterempfänger kann in Form einer Füllstation zum Befüllen des Behälters mit einem Füllgut ausgestaltet ist. Selbstverständlich kann die Behälterquelle auch in Form einer Füllstation zum Befüllen des Behälters mit einem Füllgut ausgestaltet sein und / oder der Behälterempfänger ist in Form eines Verschliessmoduls zum Verschliessen des Behälters mittels eines Deckels realisiert. In der Praxis wird es häufig so sein, dass die Füllstation parallel als Behälterempfänger und als Behälterspender arbeitet. Der Füllstation werden die leeren Behälter von einem entsprechenden Behälterspender in bestimmten Fällen eventuell mittels eines erfindungsgemässen Transportmoduls zugeführt, die Behälter werden sodann in der Füllstation mit einem Füllgut befüllt, wobei der gefüllte Behälter dann an ein weiteres erfindungsgemässes Transportmodul der Verarbeitungsvorrichtung übergeben wird, dass den gefüllten Behälter schliesslich zu einem Verschliessmodul befördert und diesem den Behälter zum Verschliessen übergibt.

Selbstverständlich ist es bei einer erfindungsgemässen Verarbeitungsvorrichtung auch vorteilhaft möglich, dass die Behälterquelle ein zweites Haltemittel zur Aufnahme und Halterung des Behälters umfasst und / oder der Behälterempfänger ein drittes Haltemittel zur Aufnahme und Halterung des Behälters umfasst, wobei das zweite Haltemittel und / oder das dritte Haltemittel zur Erfassung und Halterung des Behälters einen Greifer, insbesondere einen Greifer in Form einer Greifzange umfasst und / oder wobei das zweite Haltemittel und / oder das dritte Haltemittel zur Erfassung und Halterung des Behälters ein Kontaktmodul, insbesondere ein Unterdruck unterstütztes Saugmodul, oder ein Magnet unterstütztes Kontaktmodul, oder ein adhäsiv unterstütztes Kontaktmodul umfasst.

D.h. auch die mit dem Transportmodul der Erfindung kommunizierenden Komponenten wie beispielsweise die Behälterquelle und / oder der Behälterempfänger können mit den vorgenannten Haltemitteln ausgerüstet sein, so dass insbesondere der Vorgang der Übergabe bzw. des Austauschs der Behälter zwischen Transportmodul und Behälterquelle und / oder zwischen Transportmodul und Behälterempfänger reibungslos erfolgen kann und somit durch die Erfindung nicht nur der Transport der Behälter optimiert wird, sondern auch der Austausch der Behälter zwischen dem erfindungsgemässen Transportmodul und der mit diesem kommunizierenden Komponenten. Auch kann durch Verwendung des zweiten und / oder dritten Haltemittels das Handling und der Transport der Behälter innerhalb der Behälterquelle und / oder des Behälterempfängers weiter verbessert bzw. optimiert werden.

Die Erfindung betrifft schliesslich auch ein Verfahren zum Transport eines Behälters von einer Behälterquelle zu einem Behälterempfänger mittels eines Transportmoduls der Erfindung, insbesondere ein Verfahren zum Transport eines Behälters unter Verwendung einer erfindungsgemässen Verarbeitungsvorrichtung, wobei das Transportmodul, umfassend eine Transportstrecke mit einem Transportmittel, zwischen einem Aufnahmebereich und einem Übergabebereich zwischen der Behälterquelle und dem Behälterempfänger vorgesehen wird. Dabei wird der Behälter mittels eines am Transportmittel vorgesehen ersten Haltemittels im Aufnahmebereich von der Behälterquelle aufgenommen und gehalten, der Behälter wird vom Aufnahmebereich zum Übergabebereich vom ersten Haltemittel getragen und schwebend transportiert, und sodann wird der Behälter im Übergabebereich an den Behälterempfänger übergeben.

Wie bereits weiter oben beschrieben und anhand der Zeichnungen später noch genauer erläutert werden wird, kann der Behälter im Aufnahmebereich von der Behälterquelle mittels eines zweiten Haltemittels an das erste Haltemittel übergeben werden und / oder der Behälter kann im Übergabebereich vom ersten Haltemittel an das dritte Haltemittel des Behälterempfängers übergeben werden.

Dabei kann wie ebenfalls bereits erwähnt bei einem erfindungsgemässen Verfahren das zweite Haltemittel und / oder das dritte Haltemittel zur Erfassung und Halterung des Behälters selbstverständlich einen Greifer, insbesondere einen Greifer in Form einer Greifzange umfassen und / oder das zweite Haltemittel und / oder das dritte Haltemittel kann zur Erfassung und Halterung des Behälters ein Kontaktmodul, insbesondere ein Unterdruck unterstütztes Saugmodul, oder ein Magnet unterstütztes Kontaktmodul, oder ein adhäsiv unterstütztes Kontaktmodul umfassen.

Um eine verbesserte Handhabung d.h. Aufnahme und Halterung der Behälter garantieren zu können kann das erste Haltemittel und / oder das zweite Haltemittel und / oder das dritte Haltemittel einen Greifer, insbesondere einen Greifer in Form einer Greifzange umfassen, wobei das erste Haltemittel und / oder das zweite Haltemittel und / oder das dritte Haltemittel den Behälter mittels des Greifers an einer Ausnehmung und / oder an einer Wulst des Behälters bevorzugt formschlüssig umgreifen.

Dabei kann als Behälterquelle ein Behälterspender zum Bereitstellen leerer Behälter verwendet werden und / oder es wird ein Behälterempfänger in Form einer Füllstation zum Befüllen des Behälters mit einem Füllgut vorteilhaft verwendet. Selbstverständlich kann als Behälterquelle zudem eine Füllstation zum Befüllen des Behälters mit einem Füllgut verwendet werden und / oder es kann auch ein Behälterempfänger in Form eines Verschliessmoduls zum Verschliessen des Behälters mittels eines Deckels vorteilhaft eingesetzt werden.

In der Praxis wir ein erfindungsgemässes Transportmodul bzw. eine Verarbeitungsvorrichtung oder ein Verfahren zum Transport von Behältern gemäss der vorliegenden Erfindung besonders vorteilhaft in der Getränkeindustrie verwendet, wobei als Behälter eine Getränkedose verwendet wird und die Getränkedose mit einem flüssigen Lebensmittel befüllt wird.

Im Folgenden wird die Erfindung an Hand der schematischen Zeichnung näher erläutert. Es zeigen:
- Fig. 1: ein aus dem Stand der Technik bekanntes Transportmodul;
- Fig.2a: ein aus dem Stand der Technik bekanntes Verschliessmodul vor dem Verschliessvorgang;
- Fig.2b: das Verschliessmodul nach Fig. 2a während des Verschliessvorgangs;
- Fig.3a: schematisch ein Ausführungsbeispiel einer erfindungsgemässen Verarbeitungsvorrichtung mit Transportmodul;
- Fig. 3b: ein vergrösserter Ausschnitt der Transportstrecke gemäss Fig. 3a;
- Fig. 3c: ein Behälter aus Fig. 3b mit einer Ausnehmung und einer Wulst im oberen Haltebereich des Behälters;
- Fig. 4a: ein spezielles Ausführungsbeispiel einer Kettenführung mit Behälter an einem ersten Haltemittel;
- Fig. 4b: Funktionweise des ersten Haltemittels gemäss Fig. 4a aus Ansicht AN.

Wie bereits erwähnt, zeigen die Fig. 1 sowie Fig. 2a und Fig. 2b den Stand der Technik, der bereits eingangs eingehend erläutert wurde, so dass hier auf eine weitere Diskussion verzichtet werden kann.

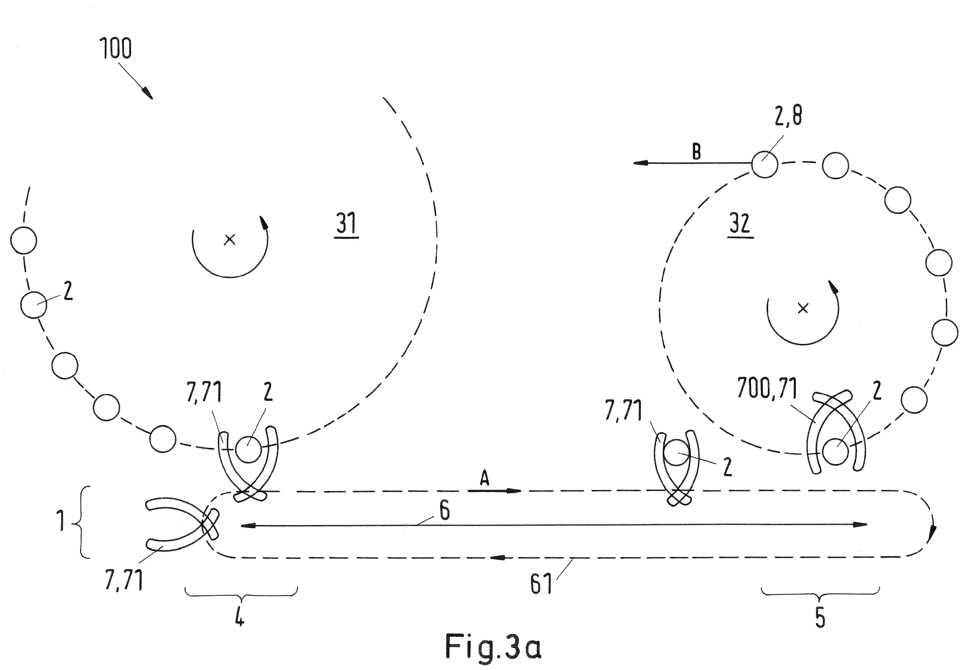

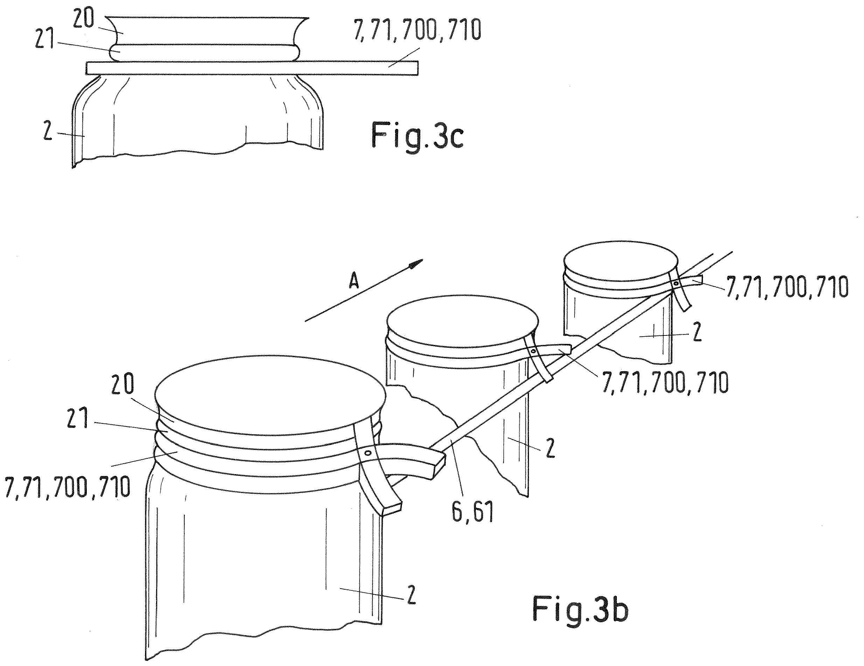

Die Fig. 3a, Fig. 3b, und Fig.3c zeigen schematisch ein einfaches Ausführungsbeispiel einer erfindungsgemässen Verarbeitungsvorrichtung 100 mit Transportmodul 1, wobei anhand der Fig. 3b ein vergrösserter Ausschnitt der Transportstrecke gemäss Fig. 3a dargestellt ist und Fig. 3c ein Behälter aus Fig. 3b mit einer Ausnehmung und einer Wulst im oberen Haltebereich des Behälters im Detail zeigt.

Das Transportmodul 1 dient zum Transport eines Behälters 2 von einer Behälterquelle 31 zu einem Behälterempfänger 32, wobei das Transportmodul 1 eine zwischen einem Aufnahmebereich 4 und einem Übergabebereich 5 vorgesehene Transportstrecke 6 mit einem Transportmittel 61 umfasst. Gemäss der vorliegenden Erfindung ist am Transportmittel 61, das hier einen an sich bekannten Kettenantrieb umfasst, ein erstes Haltemittel 7, 71 zur Aufnahme und Halterung des Behälters 2 derart angeordnet und ausgestaltet, dass die zahlreichen Behälter 2 im Aufnahmebereich 4 vom ersten Haltemittel 7, 71 erfasst, und die Behälter 2 entlang der Transportstrecke 6 vom Aufnahmebereich 4 bis zum Übergabebereich 5 vom ersten Haltemittel 7, 71 getragen und schwebend transportiert werden. Wie deutlich der Fig. 3b zu entnehmen ist, sind die Behälter 2, hier Getränkedosen 2, mittels Greifer 71, die jeweils in Form einer Greifzange ausgebildet sind, umfasst und über diese zum Transport mit dem Transportmittel 61 in Form eines Kettenantriebs verbunden.

Zur Verarbeitung der Behälter 2 ist eine Behälterquelle 31, ein Behälterempfänger 32, sowie das bereits erwähnte Transportmodul 1 vorgesehen, so dass die Behälter 2 mittels des Transportmoduls 1 von der Behälterquelle 31 zum Behälterempfänger 32 transportiert werden können. Im vorliegenden Ausführungsbeispiel gem. Fig. 3a bis Fig. 3c ist die Behälterquelle 31 in Form einer Füllstation zum Befüllen der Behälter 2 mit einem Füllgut ausgestaltet und der Behälterempfänger 32 ist in Form eines Verschliessmoduls zum Verschliessen des Behälters 2 mittels Deckeln 8 ausgestaltet.

Im vorliegenden speziellen Ausführungsbeispiel ist das Verschliessmodul ein modernes Verschliessmodul gemäss Fig. 2a bzw. Fig. 2b, wie es z.B. die Anmelderin in der eingangs bereits diskutierten PCT/EP2016/053764 vorgeschlagen hat, deren Inhalt hiermit in diese Anmeldung inkorporiert wird. Der Behälterempfänger 32 umfasst dabei zur Übernahme der Behälter 2 vom Transportmodul 1 ein drittes Haltemittel 700 das dritte Haltemittel 700 zur Erfassung und Halterung des Behälters 2 hier als einen Greifer 71, in Form einer Greifzange gleich oder ähnlich dem Greifer 71 am Transportmodul 1 ausgebildet ist.

Wie besonders gut der Fig. 3c zu entnehmen ist, ist das erste Haltemittel 7, 71 und auch das dritte Haltemittel 700 zur Erfassung und Halterung der Behälter 2 als Greifer 71 in Form einer Greifzange ausgebildet, wobei das erste Haltemittel 7, 71 das dritte Haltemittel 700 den Behälter mittels des Greifers 71 an einer Ausnehmung 20 bzw. an einer Wulst 21 des Behälters 2 formschlüssig und damit sicher und zuverlässig umgreift und dadurch hält.

Im Betriebszustand wird die Behälterquelle 31, die in den Fig. 3a bis Fig. 3c wie gesagt eine Füllstation ist, von einem hier nicht gezeigten Behälterspender mit leeren Behältern 2 beliefert, diese leeren Behälter 2 werden in der Behälterquelle 31 mit einem Füllgut, beispielsweise mit einem Getränk befüllt, danach an ein erstes Haltemittel 7, 71 in Form eines Greifers 71 des Transportmoduls 1 übergeben, das die gefüllten Behälter in Richtung A zum Behälterempfänger 32 transportiert und an das dritte Haltemittel 700, 71, das ebenfalls als Greifer 71 ausgebildet ist, zum Verschliessen mittels des Verschliessers des Behälterempfängers 32 übergibt. Nachdem die Behälter sorgfältig verschlossen sind, werden diese in Richtung B zur weiteren Verarbeitung, z.B. zur Weiterleitung an ein Verpackungsmodul zum versandfertigen Verpacken der Behälter ausgestossen.

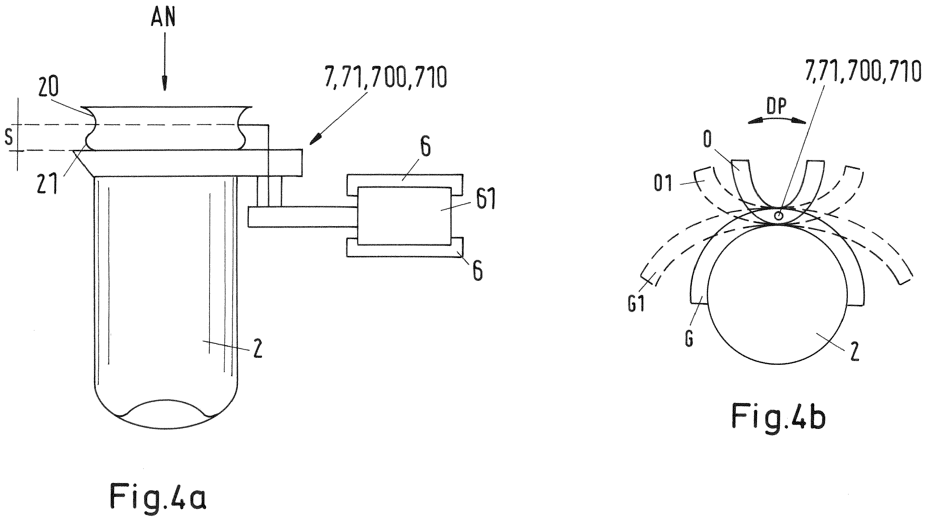

Die Fig. 4a zeigt schliesslich ein spezielles Ausführungsbeispiel einer Kettenführung mit Behälter 2 an einem ersten bzw. dritten Haltemittel 7, 71, 700 eines erfindungsgemässen Transportmoduls bzw. eines Behälterempfängers 32 der Erfindung, wobei anhand der Fig. 4b die Funktionsweise des ersten bzw. dritten Haltemittels gemäss Fig. 4a aus Ansicht AN exemplarisch dargestellt ist. Es versteht sich dabei von selbst, dass das zweite Haltemittel der Behälterquelle 31, sofern es in Form eines Greifers ausgestaltet ist, in der Praxis meist analog ausgeführt und ebenso funktioniert, wie das anhand der Fig. 4a bzw. Fig. 4b beschriebene erste und dritte Haltemittel 7, 71, 700.

Wie der Fig. 4a deutlich zu entnehmen ist, ist der Behälter 2 eine Getränkedose, die zur besseren und sicheren Erfassung durch das als Greifzange ausgestaltete erste Haltemittel 7,71, oder durch das als Greifzange ausgestaltete zweite Haltemittel 710, oder durch das als Greifzange dritte Haltemittel 700, am oberen Ende im Bereich eines Neckbereichs der Dose mit einer hier ringförmigen Aussparung 20 und einem hier ringförmigen Wulst 21 ausgestattet ist. Die Greifzange ist an einem Transmittel 61 in Form eines an sich bekannten Kettenantriebs geführt, der entlang der Transportstrecke 6 führbar ist. Am ersten, dritten bzw. zweiten Haltemittel 7, 71, 700, 710 ist ein Sensorelement S vorgesehen, mit welchem ein Öffnen oder Schliessen des Haltemittels 7, 71, 700, 710 initiiert wird, wenn der Behälter 2 von der Behälterquelle 31 an das Transportmodul 1 übergeben wird bzw. wenn der Behälter 2 vom Transportmodul an den Behälterempfänger 32 weitergegen werden soll. Zur Verdeutlichung zeigt Fig. 4b das Haltelement 7, 71, 700, 710 in verschiedenen Positionen. Nämlich im vollständig geschlossenen Zustand G, indem der Behälter 2 vom Haltelement 7, 71, 700, 710 vollständig umschlossen ist, so dass der Behälter 2 sicher gehalten wird, im halb geschlossenen Zustand G1 oder im halb offenen Zustand O1, der einem Zustand entspricht, in welchem der Behälter kurz vor der Übergabe an ein anderes Modul oder kurz nach der Übergabe an ein anderes Modul steht. Ausserdem ist das Haltelement 7, 71, 700, 71 noch in einem vollständig geöffneten Zustand O dargestellt, in welchem der Behälter 2 vom Haltelement 7, 71, 700, 71 frei gestellt ist.

Es versteht sich, dass die diskutierten speziellen Ausführungsbeispiele der Erfindung lediglich exemplarisch zu verstehen sind und die Erfindung selbstverständlich nicht auf alleine beschränkt ist. Insbesondere versteht der Fachmann, dass die beschriebenen Ausführungsbeispiele in jeder geeigneten Art und Weise kombinierbar sind und auch dem Fachmann naheliegende einfache Weiterbildungen vom beanspruchten Schutzumfang selbstverständlich umfasst sind.

## Patentansprüche

1. Transportmodul zum Transport eines Behälters (2) von einer Behälterquelle (31) zu einem Behälterempfänger (32), wobei das Transportmodul eine zwischen einem Aufnahmebereich (4) und einem Übergabebereich (5) vorgesehene Transportstrecke (6) mit einem Transportmittel (61) umfasst, **dadurch gekennzeichnet, dass** am Transportmittel (61) ein erstes Haltemittel (7, 71) zur Aufnahme und Halterung des Behälters (2) derart angeordnet und ausgestaltet ist, dass der Behälter (2) im Aufnahmebereich (4) vom ersten Haltemittel (7, 71) erfassbar, und der Behälter (2) entlang der Transportstrecke (6) vom Aufnahmebereich (4) bis zum Übergabebereich (5) vom ersten Haltemittel (7, 71) getragen, schwebend transportierbar ist.

2. Transportmodul nach Anspruch 1, wobei das erste Haltemittel (7, 71) zur Erfassung und Halterung des Behälters (2) einen Greifer (71), insbesondere einen Greifer (71) in Form einer Greifzange umfasst.

3. Transportmodul nach einem der vorangehenden Ansprüche, wobei das erste Haltemittel (7, 71) zur Erfassung und Halterung des Behälters (2) ein Kontaktmodul, insbesondere ein Unterdruck unterstütztes Saugmodul, oder ein Magnet unterstütztes Kontaktmodul, oder ein adhäsiv unterstütztes Kontaktmodul umfasst.

4. Transportmodul nach einem der vorangehenden Ansprüche, wobei das Transportmittel (61) zum Bewegen des ersten Haltemittels (7, 71) eine von einem Antrieb angetriebene Transportkette und / oder ein vom Antrieb angetriebenes Transportband umfasst.

5. Verarbeitungsvorrichtung zur Verarbeitung eines Behälters (2) umfassend eine Behälterquelle (31), einen Behälterempfänger (32), sowie ein Transportmodul (1) nach einem der vorangehenden Ansprüche, **dadurch gekennzeichnet, dass** der Behälter (2) mittels des Transportmoduls (1) von der Behälterquelle (31) zum Behälterempfänger (32) transportierbar ist.

6. Verarbeitungsvorrichtung nach Anspruch 5, wobei die Behälterquelle (31) ein Behälterspender zum Bereitstellen leerer Behälter (2) ist und / oder der Behälterempfänger (32) in Form einer Füllstation zum Befüllen des Behälters mit einem Füllgut ausgestaltet ist.

7. Verarbeitungsvorrichtung nach einem der Ansprüche 5 oder 6, wobei die Behälterquelle (31) in Form einer Füllstation zum Befüllen des Behälters (2) mit einem Füllgut ausgestaltet ist und / oder wobei der Behälterempfänger (32) in Form eines Verschliessmoduls zum Verschliessen des Behälters (2) mittels eines Deckels (8) ausgestaltet ist.

8. Verarbeitungsvorrichtung nach einem der Ansprüche 5 bis 7, wobei die Behälterquelle (31) ein zweites Haltemittel (710) zur Aufnahme und Halterung des Behälters (2) umfasst und / oder der Behälterempfänger (32) ein drittes Haltemittel (700) zur Aufnahme und Halterung des Behälters (2) umfasst, wobei das zweite Haltemittel (710) und / oder das dritte Haltemittel (700) zur Erfassung und Halterung des Behälters (2) einen Greifer (71), insbesondere einen Greifer (71) in Form einer Greifzange umfasst und / oder wobei das zweite Haltemittel (710) und / oder das dritte Haltemittel (700) zur Erfassung und Halterung des Behälters (2) ein Kontaktmodul, insbesondere ein Unterdruck unterstütztes Saugmodul, oder ein Magnet unterstütztes Kontaktmodul, oder ein adhäsiv unterstütztes Kontaktmodul umfasst.

9. Verfahren zum Transport eines Behälters (2) von einer Behälterquelle (31) zu einem Behälterempfänger (32) mittels eines Transportmoduls (1) nach einem der Ansprüche 1 bis 4 insbesondere in einer Verarbeitungsvorrichtung nach einem der Ansprüche 5 bis 8, wobei das Transportmodul (1), umfassend eine Transportstrecke (6) mit einem Transportmittel (61), zwischen einem Aufnahmebereich (4) und einem Übergabebereich (5) zwischen der Behälterquelle (31) und dem Behälterempfänger (32) vorgesehen wird, **dadurch gekennzeichnet, dass** der Behälter (2) mittels eines am Transportmittel (61) vorgesehen ersten Haltemittel (7, 71) im Aufnahmebereich von der Behälterquelle (31) aufgenommen und gehalten wird, der Behälter (2) vom Aufnahmebereich (4) zum Übergabebereich (5) vom ersten Haltemittel (7, 71) getragen schwebend transportiert wird, und der Behälter (2) im Übergabebereich (5) an den Behälterempfänger (32) übergeben wird.

10. Verfahren nach Anspruch 9, wobei der Behälter (2) im Aufnahmebereich (4) von der Behälterquelle (31) mittels eines zweiten Haltemittels (710) an das erste Haltemittel (7, 71) übergeben wird und / oder wobei der Behälter (2) im Übergabebereich (5) vom ersten Haltemittel (7, 71) an das dritte Haltemittel (700) des Behälterempfängers (32) übergeben wird.

11. Verfahren nach einem der Ansprüche 9 oder 10, wobei das zweite Haltemittel (710) und / oder das dritte Haltemittel (700) zur Erfassung und Halterung des Behälters (2) einen Greifer (71), insbesondere einen Greifer (71) in Form einer Greifzange umfasst und / oder wobei das zweite Haltemittel (710) und / oder das dritte Haltemittel (700) zur Erfassung und Halterung des Behälters (2) ein Kontaktmodul, insbesondere ein Unterdruck unterstütztes Saugmodul, oder ein Magnet unterstütztes Kontaktmodul, oder ein adhäsiv unterstütztes Kontaktmodul umfasst.

12. Verfahren nach einem der Ansprüche 9 bis 11, wobei das erste Haltemittel (7, 71) und / oder das zweite Haltemittel (710) und / oder das dritte Haltemittel (700) zur Erfassung und Halterung des Behälters (2) einen Greifer (71), insbesondere einen Greifer (71) in Form einer Greifzange umfasst, wobei das erste Haltemittel (7, 71) und / oder das zweite Haltemittel (710) und / oder das dritte Haltemittel (700) den Behälter mittels des Greifers (71) an einer Ausnehmung (20) und / oder an einer Wulst (21) des Behälters (2) bevorzugt formschlüssig umgreift.

13. Verfahren nach einem der Ansprüche 9 bis 12, wobei als Behälterquelle (31) ein Behälterspender zum Bereitstellen leerer Behälter (2) verwendet wird und / oder wobei ein Behälterempfänger (32) in Form einer Füllstation zum Befüllen des Behälters (2) mit einem Füllgut verwendet wird.

14. Verfahren nach einem der Ansprüche 9 bis 13, wobei als Behälterquelle (31) eine Füllstation zum Befüllen des Behälters mit einem Füllgut verwendet wird und / oder wobei ein Behälterempfänger (32) in Form eines Verschliessmoduls zum Verschliessen des Behälters (2) mittels eines Deckels (8) verwendet wird.

15. Verfahren nach einem der Ansprüche 9 bis 14, wobei als Behälter (2) eine Getränkedose verwendet wird und die Getränkedose mit einem flüssigen Lebensmittel befüllt wird.
